# EUROPÄISCHE PATENTSCHRIFT

(11) **EP 3 350 552 B1**
(45) Veröffentlichungstag und Bekanntmachung des Hinweises auf die Patenterteilung: **22.05.2019**
(21) Anmeldenummer: 16731583.7
(22) Anmeldetag: 22.06.2016
(51) Int. Cl.: G01F 23/284

(54) **VERFAHREN ZUR MESSUNG DES FÜLLSTANDS EINES IN EINEM BEHÄLTER BEFINDLICHEN FÜLLGUTES**
METHOD FOR MEASURING THE FILL LEVEL OF A MATERIAL IN A CONTAINER
METHODE DE MESURE DU NIVEAU DE REMPLISSAGE D'UN MATERIAU DANS UN CONTENEUR

(30) Priorität: 14.09.2015 DE 102015115462
(43) Veröffentlichungstag der Anmeldung: 25.07.2018
(73) Patentinhaber: Endress+Hauser SE+Co. KG, 79689 Maulburg (DE)
(72) Erfinder: BLÖDT, Thomas, 79585 Steiner (CH); KLÖFER, Peter, 79585 Steinen (DE); WEISHAAR, Maik, 79848 Bonndorf (DE)
(74) Vertreter: Andres, Angelika Maria
(86) Internationale Anmeldenummer: PCT/EP2016/064362
(87) Internationale Veröffentlichungsnummer: WO 2017/045788

(56) Entgegenhaltungen:
- EP-A2- 1 324 067
- WO-A2-2005/062000
- DE-A1- 19 949 992

## Beschreibung

Die Erfindung betrifft ein Verfahren zur Messung des Füllstands eines in einem Behälter befindlichen Füllgutes mittels Mikrowellen-Pulsen, sowie ein zur Ausführung dieses Verfahrens geeignetes Füllstandsmessgerät.

In der Automatisierungstechnik, insbesondere in der Prozessautomatisie-rungstechnik, werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmess-geräten, Durchflussmessgeräten, Druck- und Temperaturmessgeräten, pH-Redoxpotential-Messgeräten, Leitfähigkeitsmessgeräten, usw. integriert sind, welche die entsprechenden Prozessvariablen Füllstand, Durchfluss, Druck, Temperatur, pH-Wert, Redoxpotential bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle diejenigen Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein elektronische Komponenten verstanden, die auf der Feldebene angeordnet sind. Eine Vielzahl solcher Feldgeräte wird von der Firma Endress + Hauser hergestellt und vertrieben.

Zur Füllstandsmessung haben sich berührungslose Messverfahren etabliert, da sie robust und wartungsarm sind. Ein weiterer Vorteil besteht in der Fähigkeit, stufenlos messen zu können. Hier haben sich speziell Radar-basierte Messverfahren, die nach dem Puls-Laufzeit-Prinzip arbeiten, durchgesetzt. Bei diesem Messverfahren, welches auch unter dem Namen Pulsradar bekannt ist, werden kurze Mikrowellenpulse periodisch mit einer vordefinierten Wiederholfrequenz, z.B. in einer Größenordnung von 1 bis 2 MHz und Eigenfrequenzen im Gigahertzbereich in Richtung des Füllguts gesendet. Deren in Richtung der Sende- und Empfangseinrichtung zurück reflektierten Signalanteile werden anschließend nach einer von der im Behälter zurückgelegten Wegstrecke abhängigen Laufzeit empfangen.

Aufgrund der hohen Ausbreitungsgeschwindigkeit der Pulse mit Lichtgeschwindigkeit ist jedoch ein sehr schneller und damit sehr komplexer Zähler in Kombination mit einer schaltungstechnisch aufwendigen Statistik erforderlich, da die Laufzeit lediglich im Bereich von Nanosekunden bis Mikrosekunden liegt. Ein nach solch einem Prinzip arbeitendes Füllstandsmessgerät ist beispielsweise in der Patentschrift DE 10 2004 035757 B3 beschrieben.

Um auf einen derart komplexen Zähler verzichten zu können, kann hilfsweise eine Zeitdehnung des reflektierten Signals durchgeführt werden, indem eine Abtastung des empfangenen Signals durchgeführt wird. Somit kann eine Zeitdehnung des empfangenen Signals um einen Faktor von bis zu 10⁵ bewirkt werden. Hierdurch wird die Anforderung an den Zähler drastisch vermindert.

Solch ein Verfahren zur Zeitdehnung stellt mittlerweile das Standardverfahren im Bereich der Pulsradar-basierten Füllstandsmessung dar. Ein entsprechendes Verfahren ist beispielsweise in der Druckschrift EP 1 324 067 A2 beschrieben. Wie daraus hervorgeht, wird das resultierende Signal üblicherweise nachfolgend gleichgerichtet und über einen Tiefpassfilter und einen Analog-Digitalwandler einer Auswerteeinheit zugeführt. Hier wird anhand des resultierenden Signals die Laufzeit der Mikrowellen-Pulse ermittelt. Nachteilig an diesem Verfahren ist jedoch dessen aufwendige schaltungstechnische Realisierung, bei der vor allem die Zeitdehnung und die Auswertung der Hüllkurve vergleichsweise umfangreich sind.

Der Erfindung liegt daher die Aufgabe zugrunde, ein Radar-basiertes Verfahren zur Füllstandsmessung bereitzustellen, welches mit vermindertem schaltungstechnischem Aufwand realisiert werden kann.

Die Erfindung löst diese Aufgabe durch ein Verfahren zur Messung des Füllstands eines in einem Behälter befindlichen Füllgutes mittels Mikrowellen-Pulsen. Das Verfahren umfasst folgende Verfahrensschritte:
- Ein Mikrowellen-Puls wird in Richtung des Füllgutes ausgesendet,
- der Mikrowellen-Puls wird an der Oberfläche des Füllgutes reflektiert,
- der reflektierte Mikrowellen-Puls wird nach einer vom Füllstand abhängigen Laufzeit empfangen.
Hierbei werden die Verfahrensschritte erfindungsgemäß mit einer Wiederholfrequenz zyklisch wiederholt, wobei die Wiederholfrequenz derart in Abhängigkeit der Laufzeit gesteuert wird, dass sich die Wiederholfrequenz bei kürzer werdender Laufzeit erhöht und bei länger werdender Laufzeit verringert. Der Füllstand wird anhand der Wiederholfrequenz bestimmt.

Im Gegensatz zum klassischen Pulsradar-Verfahren bestimmt sich der Füllstand beim erfindungsgemäßen Verfahren nicht anhand der gemessenen Laufzeit, sondern anhand der sich einstellenden Wiederholfrequenz, mit der die Mikrowellen-Pulse ausgesendet werden. Die Wiederholfrequenz wird erfindungsgemäß dadurch eingestellt, dass das Aussenden eines Mikrowellen-Pulses durch den zuletzt empfangenen Mikrowellen-Puls getriggert wird. Hieraus ergibt sich der Vorteil, dass zur Füllstandsbestimmung lediglich die Wiederholfrequenz erfasst werden muss. Es benötigt im Gegensatz zum klassischen Pulsradarverfahren weder eine hochgenaue Zeitmessung, noch eine aufwendige analoge Auswerteschaltung. Auch eine aufwendige digitale Datenverarbeitung, wie es beim FMCW-basierten Verfahren zur Füllstandsmessung erforderlich ist, kann entfallen.

In einer ersten Ausführungsvariante ist die Wiederholfrequenz direkt proportional zu dem Kehrwert der Laufzeit. Hierdurch wird das Aussenden eines Mikrowellen-Pulses ohne Zeitverzögerung nach Empfang des zuletzt an der Oberfläche des Füllguts reflektierten Mikrowellen-Pulses getriggert. Sofern die Signallaufzeit innerhalb des Füllstandsmessgeräts vernachlässigt wird, bestimmt sich die Entfernung bei dieser Ausführungsvariante direkt aus dem Kehrwert der ermittelten Frequenz in Multiplikation mit der Ausbreitungsgeschwindigkeit.

Alternativ hierzu ist die Wiederholfrequenz proportional zu dem Kehrwert der Summe aus der Laufzeit und einer vordefinierten Zeitverzögerung. Dadurch ist es möglich, den Nahbereich des Füllstandsmessgeräts auszublenden. Hierdurch können von dort stammende Stör-Echos ausgeblendet werden. Die Tiefe des ausgeblendeten Nahbereichs richtet sich dabei nach der Länge der Zeitverzögerung.

In einer vorteilhaften Form des erfindungsgemäßen Verfahrens wird zum Starten der Messung oder für den Fall, dass innerhalb eines vorbestimmten maximalen Zeitintervalls kein an der Oberfläche des Füllgutes reflektierter Mikrowellen-Puls empfangen wird, ein initiierender Mikrowellen-Puls in Richtung des Füllgutes ausgesendet. Damit wird verhindert, dass in diesen Fällen die Messung gestoppt wird, so dass auch ohne empfangenen Mikrowellenpuls die Auslösung eines weiteren Mikrowellenpulses veranlasst wird.

Weiter vorteilhaft ist es, wenn zusätzlich geprüft wird, ob es sich bei dem empfangenen Mikrowellen-Puls um den an der Oberfläche des Füllgutes reflektierten Mikrowellen-Puls handelt, indem die Signalstärke des empfangenen Mikrowellen-Pulses ermittelt wird. Dabei wird der empfangene Mikrowellen-Puls herausgefiltert, wenn die Signalstärke außerhalb eines vordefinierten Bereichs liegt. Dieser vordefinierte Bereich kann beispielsweise durch eine oder mehrere Kalibrations-Messungen ermittelt werden, bei denen die Signalstärke z. B. bei komplett leerem oder komplett vollem Behälter gemessen wird.

Darüber hinaus kann in einer weiteren Ausgestaltungsform des Verfahrens geprüft werden, ob es sich bei dem empfangenen Mikrowellen-Puls um den an der Oberfläche des Füllgutes reflektierten Mikrowellen-Puls handelt,
indem
- ein zweiter Mikrowellen-Puls zeitgleich zum ersten Mikrowellen-Puls in Richtung des Füllgutes ausgesendet wird,
- der zweite Mikrowellen-Puls an der Oberfläche des Füllgutes reflektiert wird,
- der reflektierte zweite Mikrowellen-Puls nach einer vom Füllstand abhängigen Laufzeit empfangen wird,
- die Laufzeit des zweiten Mikrowellen-Pulses mit der Laufzeit des ersten Mikrowellen-Pulses verglichen wird.
Hierbei wird für den Fall, dass die Laufzeit des zweiten Mikrowellen-Pulses nicht in etwa der Laufzeit des ersten Mikrowellen-Pulses entspricht, der empfangene Mikrowellen-Puls herausgefiltert. Solche zu filternden Mikrowellen-Pulse können beispielsweise durch Störkörper innerhalb des Behälters oder durch Mehrfachechos hervorgerufen werden. Durch eine entsprechende Filterung wird vermieden, dass aufgrund solcher Mikrowellen-Pulse ein falscher Füllstandswert ermittelt wird.

Um bei stark reflektierten Mikrowellen-Pulsen ein Übersteuern zu unterdrücken, und um bei schwach reflektierten Mikrowellen-Pulsen eine ausreichende Signalstärke zu gewährleisten, ist es zudem vorteilhaft, wenn der auszusendende Mikrowellen-Puls und/oder der reflektierte Mikrowellen-Puls derart verstärkt werden/wird, dass die Verstärkung bei geringer werdender Wiederholfrequenz erhöht wird, und dass die Verstärkung bei höher werdender Wiederholfrequenz verringert wird. Durch diese Art der Steuerung trägt darüber hinaus zu einem verminderten Leistungsverbrauch des Füllstandsmessgeräts bei. Dies ist insofern relevant, als dass vor allem bei Feldgeräten in der Prozessautomation sehr hohe Anforderungen an die Explosionssicherheit gestellt werden, wodurch die maximal erlaubte Leistungsaufnahme stark begrenzt ist. Diese vorteilhafte Art der Verstärkung kann also beispielsweise maßgeblich dazu beitragen, dass das Füllstandsmessgerät den Explosionsschutzbestimmungen nach der hier relevanten Normenfamilie EN 60079-0:2009 einhält.

Die der Erfindung zugrunde liegende Aufgabe wird zudem gelöst durch ein Füllstandsmessgerät zur Ausführung des in zumindest einem der vorhergehenden Ansprüche beschriebenen Verfahrens. Hierzu umfasst das Füllstandsmessgerät:
- Eine Pulserzeugungseinheit zur zyklischen Erzeugung von Mikrowellen-Pulsen,
- zumindest eine Antennen-Einheit zum Aussenden und/oder Empfangen von Mikrowellen-Pulsen,
- eine Detektor-Einheit zur Detektion der reflektierten Mikrowellen-Pulse,
- einen Trigger zum getakteten Triggern der Pulserzeugungseinheit in Abhängigkeit der Laufzeit, und
- eine Auswerte-Einheit zur Bestimmung der Wiederholfrequenz.

Vorteilhaft umfasst das Füllstandsmessgerät des Weiteren eine Modulations-Einheit, die die Triggerung der Pulserzeugungseinheit um eine Delay-Zeit verzögert. Mittels der Modulations-Einheit ist es möglich, den Nahbereich auszublenden, wobei sich die Tiefe des Nahbereichs nach der Länge der Zeitverzögerung richtet. Hierbei kann es sich bei der Zeitverzögerung um eine vordefiniert eingeprägte Zeitverzögerung handeln. Die Modulations-Einheit kann aber auch darauf basieren, bestimmte zeitliche Segmente in Form des Empfangssignals innerhalb des Sende-Zyklus in Form einer Delay-Zeit auszublenden. Technisch kann eine vordefinierte Zeitverzögerung auf analoge Weise durch logarithmisches Zuschalten von Leitungsstücken oder durch digitale Wandlung realisiert werden.
Alternativ kann die Modulations-Einheit mittels einer Flip-Flop basierten Schaltung oder einer Pulsgatter-basierten Schaltung realisiert sein. Dies ermöglicht eine zeitweise Dämpfung oder komplette Ausblendung des von der Antennen-Einheit 4 empfangenen Empfangssignals.

Zur initiierenden Triggerung der Pulserzeugungseinheit umfasst das Füllstandsmessgerät in einer weiterführenden Ausgestaltungsform einen Initial-Trigger. Dieser dient dazu, zum Starten der Messung oder für den Fall, dass innerhalb eines vorbestimmten maximalen Zeitintervalls kein an der Oberfläche des Füllgutes reflektierter Mikrowellen-Puls empfangen wird, einen initiierenden Mikrowellen-Puls in Richtung des Füllgutes auszusenden.

In einer weiteren vorteilhaften Ausführungsform des Füllstandsmessgeräts ist zumindest eine Filter-Einheit vorgesehen, die nach einem der vorhergehend beschriebenen Verfahren prüft, ob es sich bei dem empfangenen Mikrowellen-Puls um den an der Oberfläche des Füllgutes reflektierten Mikrowellen-Puls handelt. Hierdurch wird gemäß dem erfindungsgemäßen Verfahren vermieden, dass aufgrund von empfangenen Mikrowellen-Pulsen, die nicht durch Reflektion an der Füllgutoberfläche hervorgerufen worden sind, ein falscher Füllstandswert ermittelt wird.

Für eine verbesserte Detektion der empfangenen Mikrowellenpulse ist es zudem von Vorteil, dass das Füllstandsmessgerät zumindest einen Verstärker zur Verstärkung der auszusendenden Mikrowellen-Pulse und/oder der reflektierten Mikrowellen-Pulse umfasst. Hierbei ist es von besonderem Vorteil, wenn der Verstärker die reflektierten Mikrowellen-Pulse derart verstärkt, dass die Verstärkung bei geringer werdender Wiederholfrequenz erhöht wird, und dass die Verstärkung bei höher werdender Wiederholfrequenz verringert wird. Hierdurch kann ein Übersteuern der empfangenen Mikrowellen-Pulse unterdrückt werden, wenn diese aufgrund von hohen Füllständen sehr stark reflektiert werden. Ebenfalls wird hierdurch bei niedrigen Füllständen und dementsprechend schwach reflektierten Mikrowellen-Pulsen eine ausreichende Signalstärke gewährleistet.

Anhand der nachfolgenden Figuren wird die Erfindung erläutert. Es zeigt:
Fig. 1: Ein Blockschaltbild eines erfindungsgemäßen Füllstandsmessgeräts,
Fig. 2: eine ausschnittsweise Detailansicht des Blockschaltbilds,
Fig. 3: ein erweitertes Füllstandsmessgerät mit einer Modulations-Einheit,
Fig. 4: eine analoge Ausführungsform der Modulations-Einheit,
Fig. 5a: eine digitale Ausführungsvariante der Modulations-Einheit,
Fig. 5b: eine zweite digitale Ausführungsvariante der Modulations-Einheit,
Fig. 6: ein erweitertes Füllstandsmessgerät mit zwei Antennen,
Fig. 7: ein erweitertes Füllstandsmessgerät mit einem Verstärker,
Fig. 8: ein erweitertes Füllstandsmessgerät mit digitaler Verzögerungseinheit,
Fig. 9: eine weitere Variante einer digitalen Verzögerungseinheit,
Fig. 10: ein erweitertes Füllstandsmessgerät mit zwei Antennen, und
Fig. 11: ein erweitertes Füllstandsmessgerät mit zusätzlichem Verstärker.

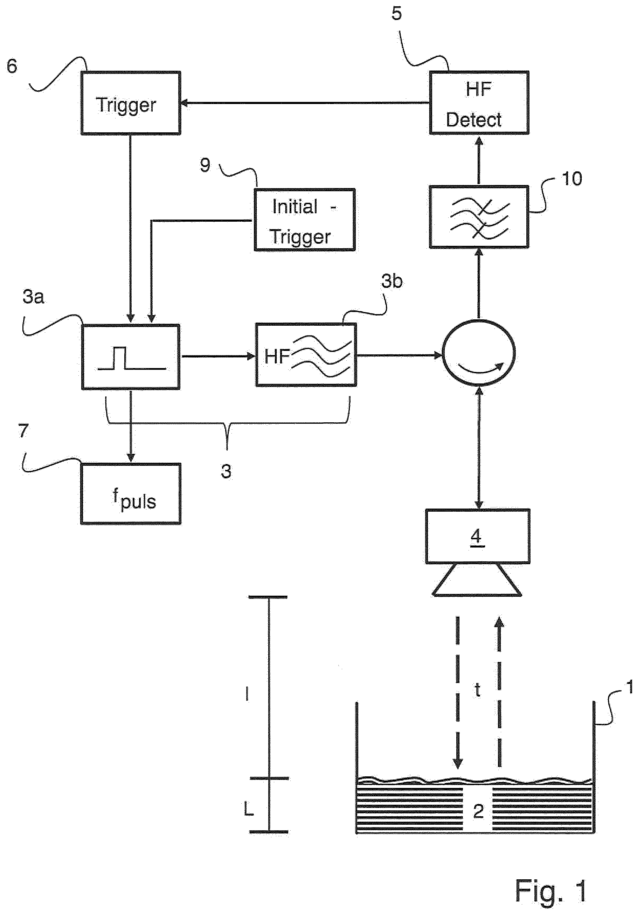

Anhand von Fig. 1, in der ein Blockschaltbild eines erfindungsgemäßen Füllstandsmessgeräts dargestellt ist, wird die Funktionsweise des erfindungsgemäßen Verfahrens zur Messung des Füllstands L eines in einem Behälter 1 befindlichen Füllguts 2 veranschaulicht.

Das Füllstandsmessgerät ist in der gezeigten Darstellung in einer vordefinierten Höhe I über dem Boden des Behälters 1 angebracht. Vom Füllstandsmessgerät werden zyklisch mit einer Wiederholfrequenz fₚᵤₗₛ Mikrowellen-Pulse durch eine Antennen-Einheit 4 in Richtung des Füllgutes 2 ausgesendet. Die Mikrowellen-Pulse werden über eine Pulserzeugungseinheit 3 angeregt und über einen Duplexer in die Antennen-Einheit 4 geleitet, wo sie in Richtung des Füllgutes 2 abgestrahlt werden.
Die Pulserzeugungseinheit 3 besteht aus zwei Teil-Komponenten, wie es aus dem Stand der Technik im Bereich Pulsradar bereits bekannt ist: Einem Pulsgenerator 3a und einem Hochfrequenzgenerator 3b, der vorzugsweise einen geringen Gütefaktor aufweist. Hierbei wird die zeitliche Länge des Mikrowellen-Pulses durch den Pulsgenerator 3a, beispielsweise einen Pulsverkürzer oder eine monostabile Kippstufe geregelt. Die Regelung erfolgt hierbei unter Berücksichtigung der Anschwingzeit, die aus dem Gütefaktor resultiert. Die im GHz Bereich liegende Eigenfrequenz des Mikrowellen-Pulses wird durch den Hochfrequenzgenerator 3b, beispielsweise einen Gunn- oder Halbleiter-Reflex-Oszillator, festgelegt. Die Triggerung des Pulsgenerators 3a, also die zeitliche Auslösung eines Mikrowellen-Pulses, wird durch einen Trigger 6 gesteuert.
Nach Reflektion an der Oberfläche des Füllguts 2 wird des Mikrowellen-Puls nach einer von der Füllhöhe L des Füllgutes abhängigen Laufzeit t an der Antenne 4 detektiert und über den Duplexer zu einer Filter-Einheit 10 geleitet.
Alternativ zu dem in Fig. 1 gezeigten Ausführungsbeispiel kann die Antennen-Einheit 4 anstatt aus einer einzigen Antenne, die in Sende- und Empfangsrichtung arbeitet, zum separaten Senden und Empfangen auch aus zwei eigenständige Antennen bestehen. In diesem Fall ist kein Duplexer als Weiche für die auszusendenden und reflektierten Mikrowellen-Pulse notwendig.

Die Filter-Einheit 10 dient zur Filterung von Mikrowellen-Pulsen, die von der Antennen-Einheit 4 empfangen werden, die jedoch nicht durch Reflektion an der Oberfläche des Füllguts 2, sondern beispielsweise durch Störkörper innerhalb des Behälters 1 oder durch Mehrfachechos hervorgerufen werden. Die Filterung kann beispielsweise darauf basieren, dass nur Mikrowellen-Pulse mit einer in einem vordefinierten Bereich liegenden Signalstärke nicht gefiltert werden. Dieser vordefinierte Bereich kann beispielsweise durch eine oder mehrere Kalibrations-Messungen ermittelt werden, bei denen die Signalstärke z. B. bei einem definierten Füllstand gemessen wird. Nach der Filterung wird der Mikrowellen-Puls von einer Detektor-Einheit 5 erfasst, durch die der Trigger 6 ausgelöst wird.

Anhand der rückgekoppelten Auslösung von Mikrowellen-Pulsen, bei dem erfindungsgemäß ein empfangener Mikrowellen-Puls jeweils den nachfolgenden Mikrowellen-Puls auslöst, stellt sich die Wiederholfrequenz fₚᵤₗₛ derart in Abhängigkeit der Laufzeit t ein, dass sich die Wiederholfrequenz fₚᵤₗₛ bei kürzer werdender Laufzeit t erhöht und bei länger werdender Laufzeit t verringert. Hierdurch ist es zur Ermittlung des Füllstandes L lediglich notwendig, die sich einstellende Wiederholfrequenz fₚᵤₗₛ durch eine Auswerte-Einheit 7 zu bestimmen. Bei der in Fig. 1 gezeigten Ausführungsvariante des erfindungsgemäßen Füllstandsmessgeräts ist die Wiederholfrequenz fₚᵤₗₛ aufgrund der direkten Rückkopplung proportional zu dem Kehrwert der Laufzeit t, sofern es keine relevante schaltungsinterne Laufzeitverzögerung gibt.

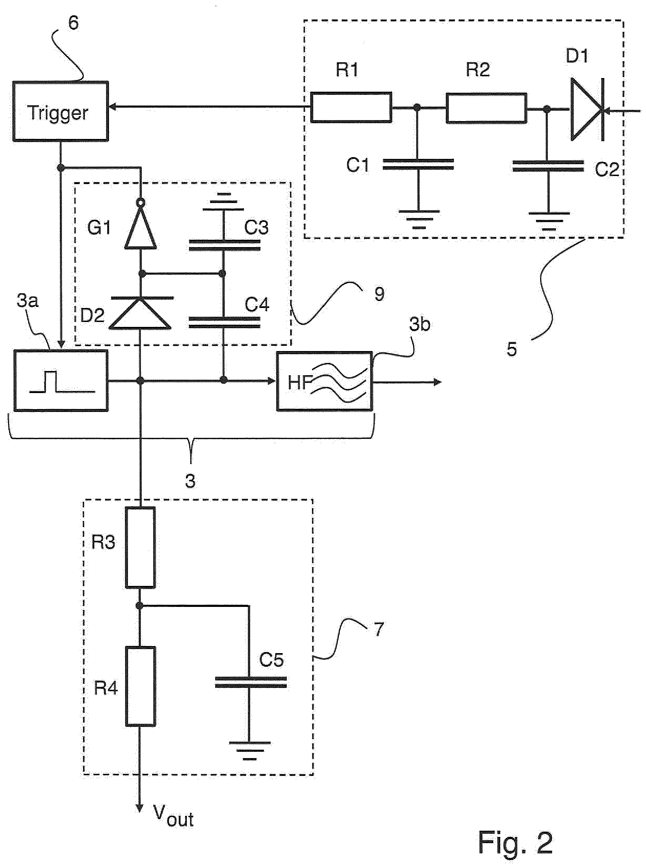

Eine ausschnittsweise Detailansicht des in Fig. 1 dargestellten Blockschaltbilds ist in Fig. 2 dargestellt. In dieser Darstellung sind vorteilhafte schaltungstechnische Möglichkeiten zur Realisierung der Detektor-Einheit 5, der Auswerte-Einheit 7 und des Initial-Triggers 9 aufgezeigt.
Die gezeigte Detektor-Einheit 5 setzt sich aus einer Gleichrichterdiode D1 und einem nachgeschalteten Tiefpass zusammen, wobei der Tiefpass aus zwei in Serie geschalteten Widerständen R1, R2 und zwei gegen Masse geschalteten Kondensatoren C1 und C2 besteht.
Der Initial-Trigger ist G1 als Umbeschaltung des Pulsgenerators 3a mit zwei Kondensatoren C3, C4, einer Diode D2 und einem NAND-Gatter ausgeführt. Hierbei wirken die Diode D2 und der Kondensator zudem zum erneuten Starten der Messung, falls kein an der Oberfläche des Füllgutes reflektierter Mikrowellen-Puls empfangen wurde und das zyklische Senden dementsprechend unterbrochen wurde. Auch die in Fig. 2 gezeigte Auswerte-Einheit 7 besteht aus einem Tiefpass, der einen gegen Masse geschalteten Kondensator C5 und zwei im Ausgangspfad befindlichen Widerstände R3, R4 umfasst. Der resultierende Gleichspannungswert des Ausgangssignals Vₒᵤₜ ist dadurch proportional zur Wiederholfrequenz fₚᵤₗₛ, so dass dem Ausgangssignal Vₒᵤₜ hierdurch ein diskreter Füllstand L zugeordnet werden kann.

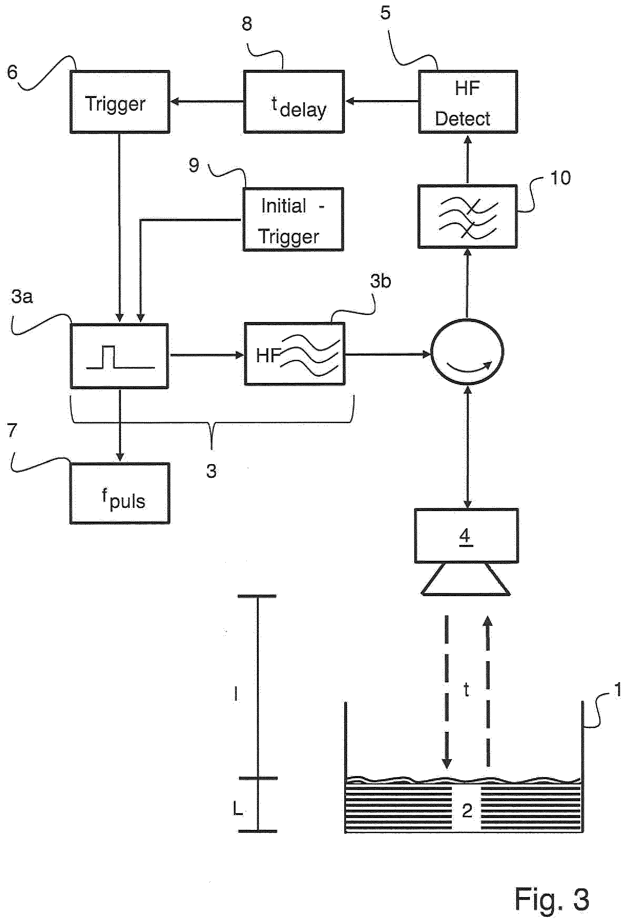

Fig. 3 zeigt eine erweiterte Ausführung des in Fig. 1 dargestellten Füllstandsmessgeräts. Die Erweiterung betrifft eine Modulations-Einheit 8, die im Signalpfad zwischen der Detektor-Einheit 5 und dem Trigger 6 angeordnet ist. Durch die Modulations-Einheit 8 wird die Auslösung des Triggers 6 um eine Delay-Zeit t_{delay} verzögert. Für den Fall, dass die Zeitverzögerung t_{delay} durch einen vordefinierten Wert eingestellt ist, kann die Modulations-Einheit 8 auf analoge Weise durch logarithmisch zugeschaltete Leitungsstücke oder auf Basis digitaler Wandlung aufgebaut sein. In diesem Fall ergibt sich die Wiederholfrequenz fₚᵤₗₛ proportional zu dem Kehrwert der Summe aus der Laufzeit t und der Delay-Zeit t_{delay}.

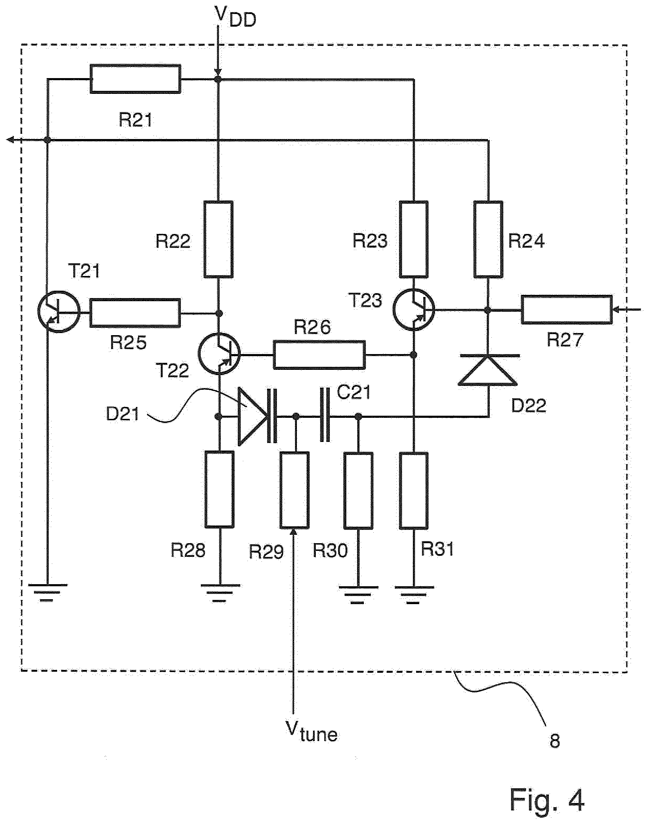

Sofern durch die Modulations-Einheit 8 keine reine Verzögerung, sondern eine zeitweise Ausblendung des Empfangssignals innerhalb des Sende-Zyklus eingestellt werden soll, kann dies ebenfalls auf analoger oder digitaler Basis durch die Modulations-Einheit 8 geschehen. Die zeitweise Ausblendung des Empfangssignals, in dem neben dem reflektierten Mikrowellen-Puls auch Stör-Echos enthalten sein können, bewirkt die Ausblendung von Stör-Echos aus dem Nahbereich des Füllstandsmessgeräts. Dabei wird die Tiefe des Nahbereichs durch den Wert der Delay-Zeit t_{delay} definiert.
Eine hierfür geeignete schaltungstechnische Realisierungsvariante der Modulations-Einheit 8 auf analoger Basis ist in Fig. 4 dargestellt. Die dort gezeigte Schaltung basiert auf einer Kaskade aus drei Transistoren T21, T22, T23, wobei das Empfangssignal über einen Eingangswiderstand R27 zur Basis bzw. dem Gate des Eingangstransistors T23 geleitet wird. Das Einstellen der Delay-Zeit t_{delay} erfolgt durch eine analoge Gleichspannung Vₜᵤₙₑ über einen Widerstand R29, wodurch ein entsprechendes Potenzial am Ausgang einer Varaktordiode D21 eingestellt wird. Der Kondensator C21 dient hierbei zum Abtrennen dieses Potentials vom Rest der Schaltung. Für den Fall, dass die Delay-Zeit t_{delay} nicht konfigurierbar ist, sondern durch die Schaltung voreingestellt wird, kann dies über eine entsprechende Dimensionierung eines Kondensators erfolgen. In diesem Fall ist die Varaktordiode D21 durch einen Kurzschluss ersetzt, der Widerstand R29 entfällt.

Um der hohen Pulsfrequenz fₚᵤₗₛ gerecht zu werden, ist es vorteilhaft, die Transistoren T21, T22, T23 als diskrete Bipolar Transistoren auszulegen, da sie generell eine schnellere Ansprechzeit als MOS-FET Transistoren aufweisen.

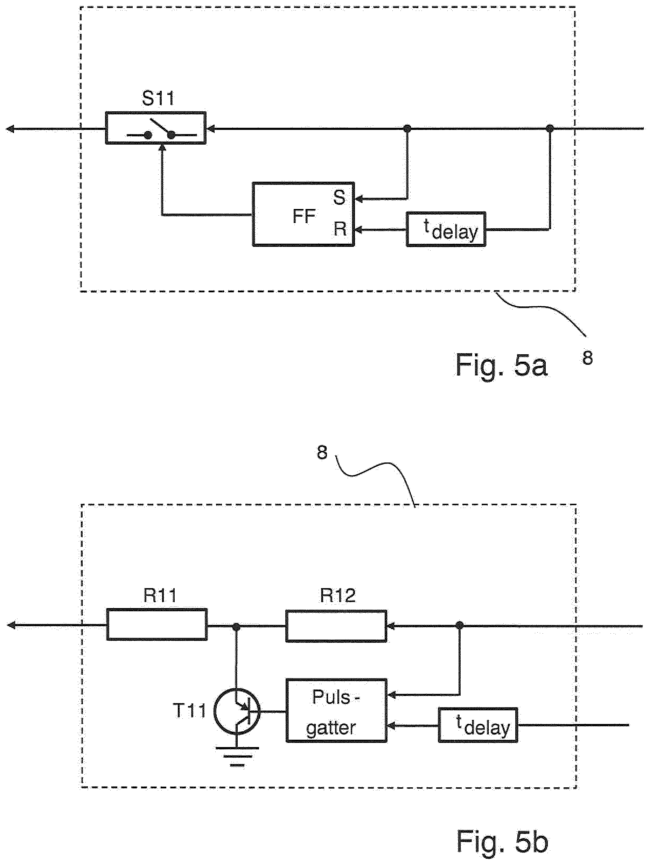

Alternativ zu einer analogen Realisierung kann eine zeitweise Ausblendung des Empfangssignals auch auf digitaler Basis durchgeführt werden. Zwei hierfür geeignete Ausgestaltungsvarianten der Modulations-Einheit 8 sind in Fig. 5a und Fig. 5b dargestellt. Bei dem in Fig. 5a gezeigten Schaltkreis erfolgt die Ausblendung über einen Schalter S11, der von einem Flipflop FF geschaltet wird. Die Eingangssignale S, R des Flipflops werden hierbei durch das Empfangssignal beziehungsweise das mit t_{delay} verzögerte Empfangssignal gebildet.

Bei der in Fig. 5b gezeigten Variante der Modulations-Einheit 8 wird die Ausblendung des Empfangssignals dadurch erreicht, dass das Empfangssignal durch einen Transistor T11 auf Masse gezogen wird. Die Steuerung des Transistors T11 erfolgt hierbei über ein Pulsgatter, dessen Eingänge durch das Empfangssignal bzw. das mit t_{delay} verzögerte Empfangssignal gespeist werden.

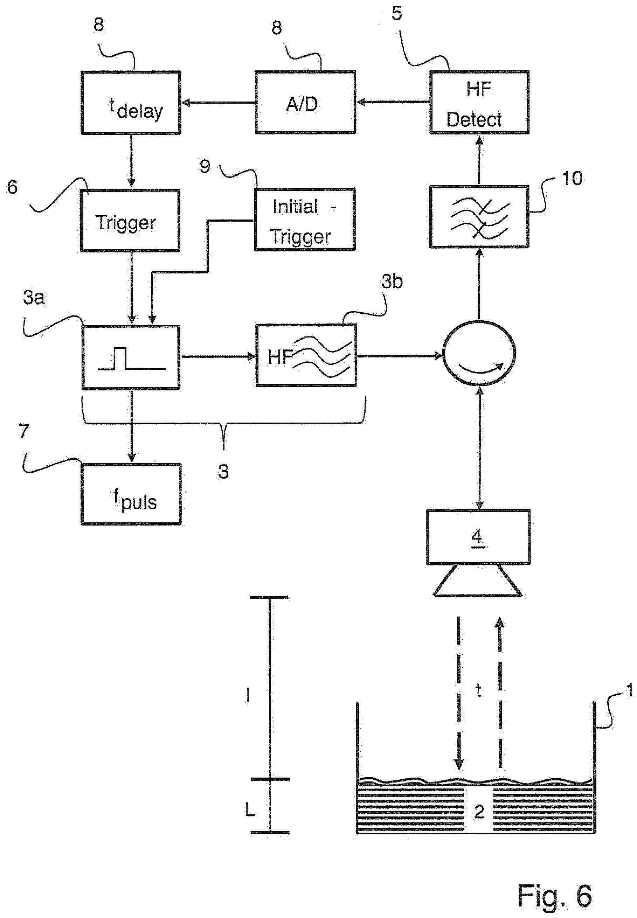

Die in Fig. 5a und Fig. 5b gezeigten Varianten zur digitalen Ausblendung des Empfangssignals setzen voraus, dass das Empfangssignal einen wertediskreten Spannungspegel aufweist. Dies setzt eine entsprechende Digitalisierung des Empfangssignals vor der Modulations-Einheit 8, wie es in Fig. 6 gezeigt ist, voraus.

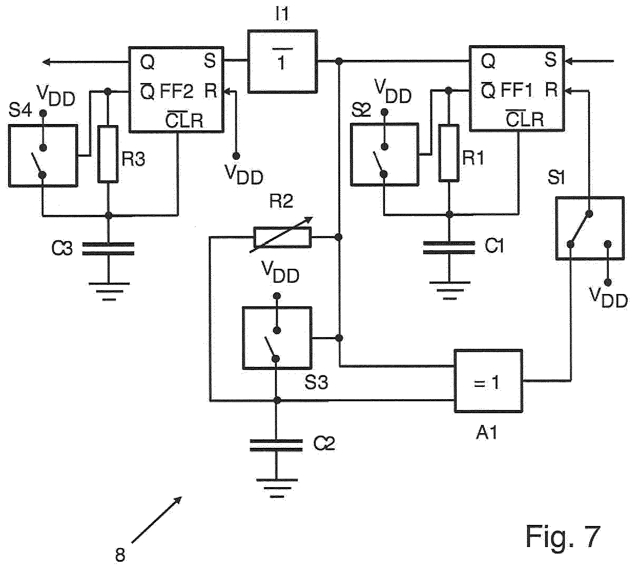

In Fig. 7 bis Fig. 9 sind Ausführungsbeispiele der Modulations-Einheit 8 gezeigt, bei dem eine Digitalisierung des Empfangssignals durch eine vorgelagerte Torschaltung durchgeführt wird. Dort besteht die Torschaltung aus einem Flipflop FF1, zwei Schaltern S1, S3, einem AND-Gatter A1, einem Potentiometer R2 und einer Kapazität C2.

Je nach Schalterstellung des Schalters S1 kann das Flipflop FF1 auf das Empfangssignal oder einen Referenz-Puls getriggert werden (in der dargestellten Schalterstellung wird auf das Empfangssignal getriggert). Eine veränderliche Totzeit des Flipflops FF1 kann durch Änderung des Potentiometers R2 bewirkt werden.

Die eigentliche Zeitverzögerung t_{delay} wird über die Entladekurve eines Widerstandes R1 und einer Kapazität C1 eingestellt. Hierbei wird das Empfangssignal über den Widerstand R1 und die Kapazität C1 entladen, bis der Pegel unter eine vordefinierte Schwelle fällt.

Bei der in Fig. 7 dargestellten Ausführungsvariante wird die Zeitverzögerung t_{delay} durch einen kaskadierten Aufbau erreicht. Analog zu dem ersten Flipflop FF1, dem Schalter S2, dem Widerstand R1 und der Kapazität C1 ist ein zweites Flipflop FF2, ein weiteres RC-Glied R3, C3 und ein weiterer Schalter S4 mit derselben Funktion nachgeschaltet.

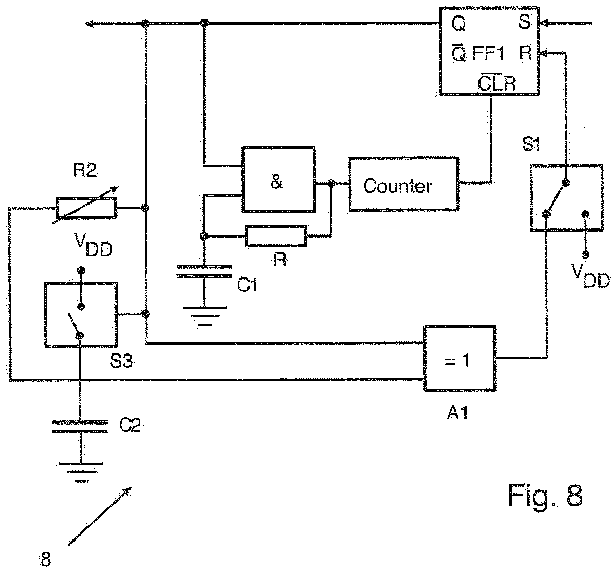

Anstellte der in Fig. 7 gezeigten Variante zur Realisierung der Zeitverzögerung durch ein RC-Glied R1, C1 und S2, bzw. R3, C3 und S4, ist es auch möglich die Zeitverzögerung t_{delay} durch einen digitalen Zähler, wie in Fig. 8 dargestellt, zu erreichen. In diesem Fall wird nach Detektion des Empfangssignals durch das Flipflop FF1 der AND-Gatter-Oszillator eingeschaltet und bis zu einem vorbestimmten Zählerstand hochgezählt. Bei Erreichen dieses Zählerstandes wird ein Rücksetz-Signal durch den Zähler erzeugt und das Flipflop somit zurückgesetzt.

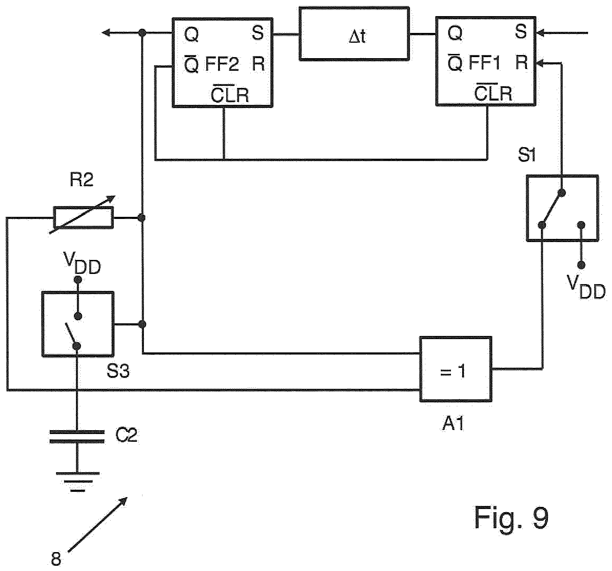

Eine dritte Variante zur Realisierung der Zeitverzögerung t_{delay} ist in Fig. 9 dargestellt. Bei dieser Variante wird eine Verzögerungsleitung Δt zur Verzögerung im ns-Bereich, beispielsweise hierfür geeignete Logik-IC's oder akustische Verzögerungsleitungen, eingesetzt. Nach Empfang des Empfangssignals durch den ersten Flipflop FF1 wird an dessen Ausgang Q ein Signal erzeugt, wobei dieses durch die Verzögerungsleitung Δt verzögert wird. Nach Ablauf der Zeitverzögerung t_{delay} wird ein zweites Flipflop angesteuert und ein Rücksetzsignal für beide Flipflops FF1, FF2 erzeugt.

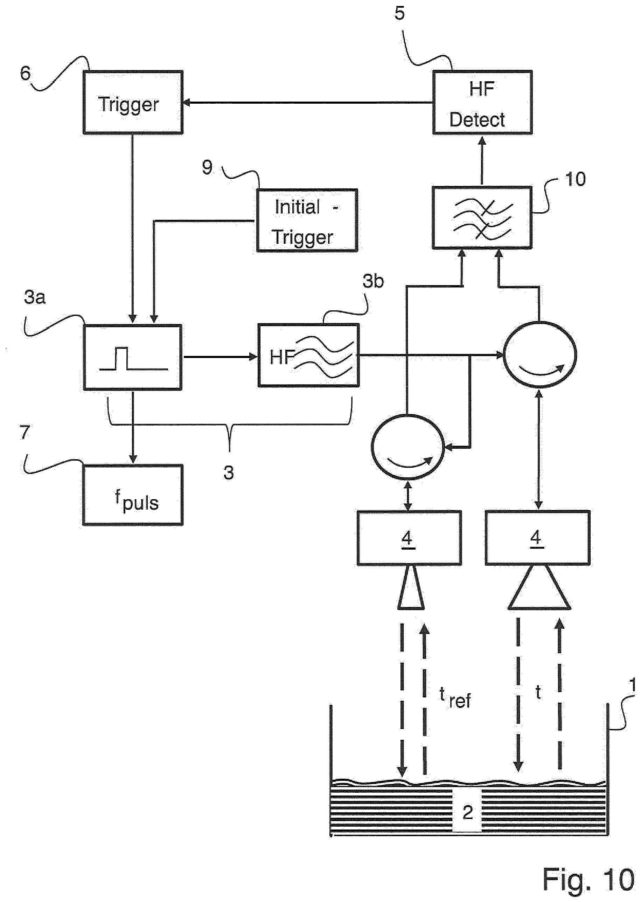

Fig. 10 zeigt eine erweiterte Ausführungsvariante des in Fig. 1 dargestellten Füllstandsmessgeräts. Im Gegensatz zu dem in Fig. 1 gezeigten Aufbau umfasst die Antennen-Einheit 4 zwei Sende- und Empfangsantennen, die separat über zwei Duplexer von der Pulserzeugungseinheit 3 angesteuert werden. Die von den zwei Antennen empfangenen Empfangssignale werden bei dieser Ausgestaltungsvariante in der Filter-Einheit 10 durch eine AND-Logik gefiltert. Hierdurch kann ebenfalls eine Unterdrückung von Stör-Echos erreicht werden. Dies wird dadurch bewirkt, dass durch die zusätzliche zweite Antenne ein zweiter Mikrowellen-Puls zeitgleich zum ersten Mikrowellen-Puls in Richtung des Füllgutes ausgesendet wird. Hierbei wird für den Fall, dass die Laufzeit t_{ref} des zweiten Mikrowellen-Pulses nicht in etwa der Laufzeit t des ersten Mikrowellen-Pulses entspricht, der empfangene Mikrowellen-Puls durch die AND-Logik herausgefiltert. Um die Wirksamkeit dieser Variante zu maximieren, ist es vorteilhaft, die zwei Antennen der Antennen-Einheit derart auszurichten, dass sie möglichst verschiedene Abstrahlbereiche erfassen. Damit wird erreicht, dass die Antennen neben dem von der Oberfläche des Füllguts 2 reflektierten Mikrowellen-Puls nicht die gleichen Stör-Echos empfangen. In der Folge werden diese Stör-Echos durch die AND-Logik der Filter-Einheit 10 ausgefiltert. Auf Basis dieses Wirkprinzips erhöht die in Fig. 10 gezeigte Ausführungsvariante die Robustheit des Füllstandsmessgeräts gegenüber Stör-Echos.

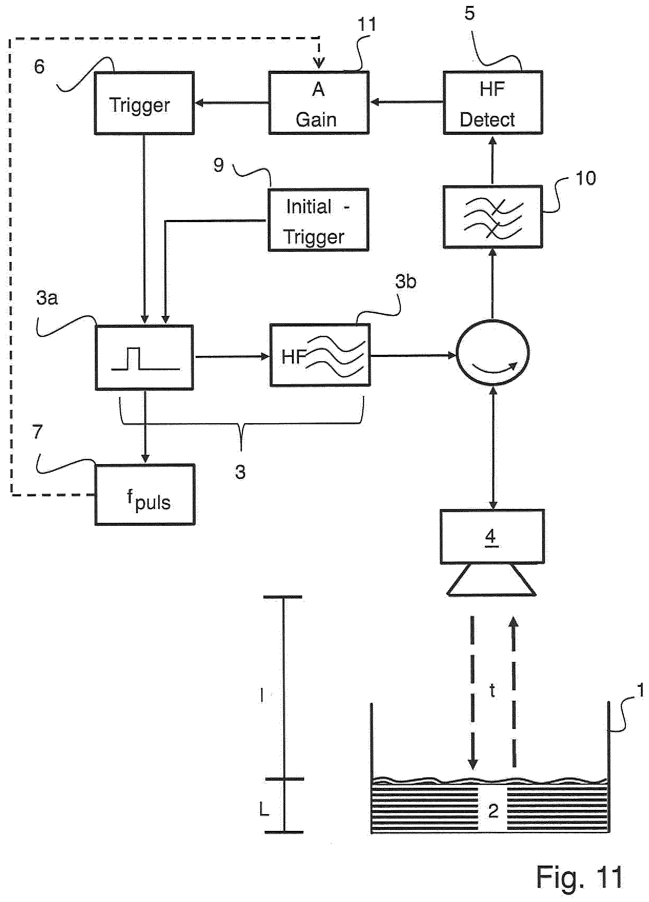

Die in Fig. 11 dargestellte Ausführungsvariante des erfindungsgemäßen Füllstandsmessgeräts zeichnet sich durch einen zusätzlichen Verstärker 11, der im Empfangspfad zwischen der Detektor-Einheit 5 und dem Trigger 6 angeordnet ist, aus. Hierbei wird die Verstärkung A anhand der Wiederholfrequenz fₚᵤₗₛ gesteuert. Vorteilhaft wird der Verstärker 11 derart gesteuert, dass die Verstärkung A bei geringer werdender Wiederholfrequenz fₚᵤₗₛ erhöht wird, und dass die Verstärkung A bei höher werdender Wiederholfrequenz fₚᵤᵢₛ verringert wird. Insbesondere bei kurzen Distanzen oder stark reflektierenden Oberflächen kann ist es von Vorteil, wenn die Verstärkung derart schwach eingestellt ist, dass der Verstärker 11 eine signaldämpfende Wirkung aufweist. Im Sinne der Erfindung kann ein gleichermaßen angesteuerter Verstärker natürlich auch im Sendepfad angeordnet sein.
Durch den entsprechend angesteuerten Verstärker 11 kann ein Übersteuern der empfangenen Mikrowellen-Pulse unterdrückt werden, wenn diese beispielsweise aufgrund von hohen Füllständen sehr stark reflektiert werden. Ebenfalls wird hierdurch bei niedrigen Füllständen und entsprechend schwach reflektierten Mikrowellen-Pulsen eine ausreichende Signalstärke des Empfangssignals gewährleistet. Insgesamt trägt die Art der Steuerung auch zu einem verminderten Leistungsverbrauch des Füllstandsmessgeräts bei. Dies ist insofern relevant, als dass vor allem bei Feldgeräten in der Prozessautomation sehr hohe Anforderungen an die Explosionssicherheit gestellt werden, wodurch die maximal erlaubte Leistungsaufnahme stark begrenzt ist.

### Bezugszeichenliste

- 1: Behälter
- 2: Füllgut
- 3: Pulserzeugungseinheit
- 4: Antennen-Einheit
- 5: Detektor-Einheit
- 6: Trigger
- 7: Auswerte-Einheit
- 8: Modulations-Einheit
- 9: Initial-Trigger
- 10: Filter-Einheit
- 11: Verstärker
- fₚᵤₗₛ: Wiederholfrequenz
- L: Füllstand
- t: Laufzeit
- t_{delay}: Zeitverzögerung
- t_{ref}: Laufzeit

## Patentansprüche

1. Verfahren zur Messung des Füllstands (L) eines in einem Behälter befindlichen Füllgutes (2) mittels Mikrowellen-Pulsen, folgende Verfahrensschritte umfassend:
- Ein Mikrowellen-Puls wird in Richtung des Füllgutes (2) ausgesendet,
- der Mikrowellen-Puls wird an der Oberfläche des Füllgutes (2) reflektiert,
- der reflektierte Mikrowellen-Puls wird nach einer vom Füllstand (L) abhängigen Laufzeit (t) empfangen,
wobei die Verfahrensschritte mit einer Wiederholfrequenz (fₚᵤₗₛ) zyklisch wiederholt werden,
**dadurch gekennzeichnet, dass**
die Wiederholfrequenz (fₚᵤₗₛ) derart in Abhängigkeit der Laufzeit (t) gesteuert wird, dass sich die Wiederholfrequenz (fₚᵤₗₛ) bei kürzer werdender Laufzeit (t) erhöht und bei länger werdender Laufzeit (t) verringert, und
wobei anhand der Wiederholfrequenz (fₚᵤₗₛ) der Füllstand (L) bestimmt wird.

2. Verfahren nach Anspruch 1,
**dadurch gekennzeichnet, dass**
die Wiederholfrequenz (fₚᵤₗₛ) proportional zu dem Kehrwert der Laufzeit (t) ist.

3. Verfahren nach Anspruch 1,
**dadurch gekennzeichnet, dass**
die Wiederholfrequenz (fₚᵤₗₛ) proportional zu dem Kehrwert der Summe aus der Laufzeit (t) und einer Delay-Zeit (t_{delay}) ist.

4. Verfahren nach zumindest einem der vorhergehenden Ansprüche,
**dadurch gekennzeichnet, dass**
zum Starten der Messung oder für den Fall, dass innerhalb eines vorbestimmten maximalen Zeitintervalls (Δtₘₐₓ) kein an der Oberfläche des Füllgutes (2) reflektierter Mikrowellen-Puls empfangen wird, ein initiierender Mikrowellen-Puls in Richtung des Füllgutes (2) ausgesendet wird.

5. Verfahren nach zumindest einem der vorhergehenden Ansprüche,
**dadurch gekennzeichnet, dass**
geprüft wird, ob es sich bei dem empfangenen Mikrowellen-Puls um den an der Oberfläche des Füllgutes (2) reflektierten Mikrowellen-Puls handelt,
indem
- die Signalstärke des empfangenen Mikrowellen-Pulses ermittelt wird,
wobei der empfangene Mikrowellen-Puls herausgefiltert wird, wenn die Signalstärke außerhalb eines vordefinierten Bereichs liegt.

6. Verfahren nach zumindest einem der vorhergehenden Ansprüche,
**dadurch gekennzeichnet, dass**
geprüft wird, ob es sich bei dem empfangenen Mikrowellen-Puls um den an der Oberfläche des Füllgutes (2) reflektierten Mikrowellen-Puls handelt,
indem
- ein zweiter Mikrowellen-Puls zeitgleich zum ersten Mikrowellen-Puls in Richtung des Füllgutes (2) ausgesendet wird,
- der zweite Mikrowellen-Puls an der Oberfläche des Füllgutes (2) reflektiert wird,
- der reflektierte zweite Mikrowellen-Puls nach einer vom Füllstand (L) abhängigen Laufzeit (t_{ref}) empfangen wird,
- die Laufzeit (t_{ref}) des zweiten Mikrowellen-Pulses mit der Laufzeit (t) des ersten Mikrowellen-Pulses verglichen wird,
wobei für den Fall, dass die Laufzeit (t_{ref}) des zweiten Mikrowellen-Pulses nicht in etwa der Laufzeit (t) des ersten Mikrowellen-Pulses entspricht, der empfangene Mikrowellen-Puls herausgefiltert wird.

7. Verfahren nach zumindest einem der vorhergehenden Ansprüche,
**dadurch gekennzeichnet, dass**
der auszusendende Mikrowellen-Puls und/oder der empfangene Mikrowellen-Puls derart verstärkt werden/wird, dass die Verstärkung (A) bei geringer werdender Wiederholfrequenz (fₚᵤₗₛ) erhöht wird, und dass die Verstärkung (A) bei höher werdender Wiederholfrequenz (fₚᵤₗₛ) verringert wird.

8. Füllstandsmessgerät zur Ausführung des in zumindest einem der vorhergehenden Ansprüche beschriebenen Verfahrens, umfassend:
- Eine Pulserzeugungseinheit (3) zur Erzeugung von Mikrowellen-Pulsen,
- zumindest eine Antennen-Einheit (4) zum Aussenden und/oder Empfangen von Mikrowellen-Pulsen,
- eine Detektor-Einheit (5) zur Detektion der reflektierten Mikrowellen-Pulse,
- einen Trigger (6) zum getakteten Triggern der Pulserzeugungseinheit (3) in Abhängigkeit der Laufzeit (t), und
- eine Auswerte-Einheit (7) zur Bestimmung der Wiederholfrequenz (fₚᵤₗₛ).

9. Füllstandsmessgerät nach Anspruch 8, des weiteren umfassend
- eine Modulationseinheit (8), welche die Triggerung der Pulserzeugungseinheit (3) um eine Delay-Zeit (t_{delay}) verzögert.

10. Füllstandsmessgerät nach Anspruch 8 oder 9, des weiteren umfassend
- einen Initial-Trigger (9) zur initiierenden Triggerung der Pulserzeugungseinheit (3).

11. Füllstandsmessgerät nach zumindest einem der Ansprüche 8 bis 10, wobei zumindest eine Filter-Einheit (10) vorgesehen ist, die nach dem in Anspruch 5 und/oder 6 beschriebenen Verfahren prüft, ob es sich bei dem empfangenen Mikrowellen-Puls um den an der Oberfläche des Füllgutes (2) reflektierten Mikrowellen-Puls handelt.

12. Füllstandsmessgerät nach zumindest einem der Ansprüche 8 bis 11, des weiteren umfassend
- zumindest einen Verstärker (11) zur Verstärkung (A) der auszusendenden Mikrowellen-Pulse und/oder der reflektierten Mikrowellen-Pulse.

13. Füllstandsmessgerät nach Anspruch 12, wobei der Verstärker (11) die reflektierten Mikrowellen-Pulse derart verstärkt, dass die Verstärkung (A) bei geringer werdender Wiederholfrequenz (fₚᵤₗₛ) erhöht wird, und dass die Verstärkung (A) bei höher werdender Wiederholfrequenz (fₚᵤₗₛ) verringert wird.

## Claims

1. Procedure designed to measure the level (L) of a product (2) in a container using microwave pulses, said procedure comprising the following steps:
- A microwave pulse is emitted in the direction of the product (2),
- The microwave pulse is reflected at the surface of the product (2),
- The reflected microwave pulse is received after a time-of-flight (t) that depends on the level (L),
wherein the steps of the procedure are repeated cyclically at a repetition frequency (fₚᵤₗₛ),
**characterized in that**
the repetition frequency (fₚᵤₗₛ) is controlled depending on the time-of-flight (t) in such a way that the repetition frequency (fₚᵤₗₛ) increases when the time-of-flight (t) becomes shorter and decreases when the time becomes longer (t), and
wherein the level (L) is determined based on the repetition frequency (fₚᵤₗₛ).

2. Procedure as claimed in Claim 1,
**characterized in that**
the repetition frequency (fₚᵤₗₛ) is proportional to the inverse of the time-of-flight (t).

3. Procedure as claimed in Claim 1,
**characterized in that**
the repetition frequency (fₚᵤₗₛ) is proportional to the inverse of the sum of the time-of-flight (t) and a delay time (t_{delay}).

4. Procedure as claimed in at least one of the previous claims,
**characterized in that**
an initiating microwave pulse is emitted in the direction of the product (2) to start the measurement or in the event that no microwave pulse reflected at the surface of the surface of the product (2) is received within a predefined maximum time interval (Δtₘₐₓ).

5. Procedure as claimed in at least one of the previous claims,
**characterized in that**
a check is performed to determine whether the microwave pulse received is the microwave pulse reflected at the surface of the product (2),
**in that**
- the signal intensity of the received microwave pulse is determined, wherein the received microwave pulse is filtered out if the signal intensity is outside a predefined range.

6. Procedure as claimed in at least one of the previous claims,
**characterized in that**
a check is performed to determine whether the microwave pulse received is the microwave pulse reflected at the surface of the product (2),
**in that**
- a second microwave pulse is emitted simultaneously with the first microwave pulse in the direction of the product (2),
- the second microwave pulse is reflected at the surface of the product (2),
- the reflected second microwave pulse is received after a time-of-flight (t_{ref}) dependant on the level (L),
- the time-of-flight (t_{ref}) of the second microwave pulse is compared against the time-of-flight (t) of the first microwave pulse,
wherein in the case that the time-of-flight (t_{ref}) of the second microwave pulse does not approximately correspond to the time-of-flight (t) of the first microwave pulse, the received microwave pulse is filtered out.

7. Procedure as claimed in at least one of the previous claims,
**characterized in that**
the microwave pulse to be emitted and/or the microwave pulse received is/are amplified in such a way that the amplification (A) is increased as the repetition frequency (fₚᵤₗₛ) decreases and **in that** the amplification (A) is decreased as the repetition frequency (fₚᵤₗₛ) increases.

8. Level transmitter designed to perform the procedure described in at least one of the previous claims, comprising:
- A pulse generation unit (3) designed to generate microwave pulses,
- At least one antenna unit (4) designed to transmit and/or receive microwave pulses,
- A detector unit (5) designed to detect the reflected microwave pulses,
- A trigger (6) designed to cyclically trigger the pulse generation unit (3) depending on the time-of-flight (t), and
- An evaluation unit (7) designed to determine the repetition frequency (fₚᵤₗₛ).

9. Level transmitter as claimed in Claim 8, further comprising
- A modulation unit (8), which delays the triggering of the pulse generation unit (3) by a delay time (t_{delay}).

10. Level transmitter as claimed in Claim 8 or 9, further comprising
- an initial trigger (9) for the initial triggering of the pulse generation unit (3).

11. Level transmitter as claimed in at least one of the Claims 8 to 10, wherein at least one filter unit (10) is provided, which verifies - according to the procedure described in Claim 5 and/or 6 - whether the received microwave pulse is the microwave pulse reflected at the surface of the product (2).

12. Level transmitter as claimed in at least one of the Claims 8 to 11, further comprising
- at least one amplifier (11) designed for the amplification (A) of the microwave pulses to be emitted and/or of the reflected microwave pulses.

13. Level transmitter as claimed in Claim 12, wherein the amplifier (11) amplifies the reflected microwave pulses in such a way that the amplification (A) increases as the repetition frequency (fₚᵤₗₛ) decreases and in that the amplification (A) decreases as the repetition frequency (fₚᵤₗₛ) increases.

## Revendications

1. Procédé destiné à la mesure du niveau (L) d'un produit (2) se trouvant dans un réservoir, au moyen d'impulsions micro-ondes, lequel procédé comprend les étapes suivantes :
- Une impulsion micro-onde est émise en direction du produit (2),
- L'impulsion micro-onde est réfléchie à la surface du produit (2),
- L'impulsion micro-onde réfléchie est reçue après un temps de propagation (t) dépendant du niveau (L),
les étapes de procédé étant répétées de façon cyclique à une fréquence de répétition (fₚᵤₗₛ),
**caractérisé**
**en ce que** la fréquence de répétition (fₚᵤₗₛ) est commandée en fonction du temps de propagation (t) de telle sorte que la fréquence de répétition (fₚᵤₗₛ) augmente à mesure que le temps de propagation (t) se raccourcit et diminue à mesure que le temps de propagation (t) s'allonge, et
procédé pour lequel le niveau (L) est déterminé au moyen de la fréquence de répétition (fₚᵤₗₛ).

2. Procédé selon la revendication 1,
**caractérisé**
**en ce que** la fréquence de répétition (fₚᵤₗₛ) est inversement proportionnelle au temps de propagation (t).

3. Procédé selon la revendication 1,
**caractérisé**
**en ce que** la fréquence de répétition (fₚᵤₗₛ) est inversement proportionnelle à la somme du temps de propagation (t) et d'un temps de retard (t_{delay}).

4. Procédé selon au moins l'une des revendications précédentes,
**caractérisé**
**en ce que**, pour le démarrage de la mesure ou pour le cas où aucune impulsion micro-onde réfléchie n'est reçue à la surface du produit (2) dans un intervalle de temps maximum (Δtₘₐₓ) prédéfini, une impulsion micro-onde déclenchée est émise en direction du produit (2).

5. Procédé selon au moins l'une des revendications précédentes,
**caractérisé**
**en ce que** l'on vérifie si, concernant l'impulsion micro-onde reçue, il s'agit d'une impulsion micro-onde réfléchie à la surface du produit (2),
**en ce que**
- l'intensité de signal de l'impulsion micro-onde reçue est déterminée, l'impulsion micro-onde reçue étant éliminée par filtrage lorsque l'intensité du signal est en dehors d'une plage prédéfinie.

6. Procédé selon au moins l'une des revendications précédentes,
**caractérisé**
**en ce que** l'on vérifie si, concernant l'impulsion micro-onde reçue, il s'agit d'une impulsion micro-onde réfléchie à la surface du produit (2),
**en ce que**
- une deuxième impulsion micro-onde est émise simultanément avec la première impulsion micro-onde en direction du produit (2),
- la deuxième impulsion micro-onde est réfléchie à la surface du produit (2),
- la deuxième impulsion micro-onde réfléchie est reçue après un temps de propagation (t_{ref}) dépendant du niveau (L),
- le temps de propagation (t_{ref}) de la deuxième impulsion micro-onde est comparé avec le temps de propagation (t) de la première impulsion micro-onde,
procédé pour lequel, dans le cas où le temps de propagation (t_{ref}) de la deuxième impulsion micro-onde ne correspond pas approximativement au temps de propagation (t) de la première impulsion micro-onde, l'impulsion micro-onde reçue est éliminée par filtrage.

7. Procédé selon au moins l'une des revendications précédentes,
**caractérisé**
**en ce que** l'impulsion micro-onde à émettre et/ou l'impulsion micro-onde reçue sont/est amplifiée(s) de telle sorte que l'amplification (A) diminue à mesure que la fréquence de répétition (fₚᵤₗₛ) augmente.

8. Transmetteur de niveau destiné à l'exécution du procédé décrit dans au moins l'une des revendications précédentes, comprenant :
- Une unité de génération d'impulsions (3) destinée à la génération d'impulsions micro-ondes,
- Au moins une unité d'antenne (4) destinée à l'émission et/ou la réception d'impulsions micro-ondes,
- Une unité de détection (5) destinée à la détection des impulsions micro-ondes reçues,
- Un déclencheur (6) destiné au déclenchement cyclique de l'unité de génération d'impulsions (3) en fonction du temps de propagation (t), et
- Une unité d'exploitation (7) destinée à la détermination de la fréquence de répétition (fₚᵤₗₛ).

9. Transmetteur de niveau selon la revendication 8, comprenant en outre
- une unité de modulation (8), qui retarde le déclenchement de l'unité de génération d'impulsions (3) d'un temps de retard (t_{delay}).

10. Transmetteur de niveau selon la revendication 8 ou 9, comprenant en outre
- un déclencheur initial (9) destiné au déclenchement de l'unité de génération d'impulsions (3).

11. Transmetteur de niveau selon au moins l'une des revendications 8 à 10, pour lequel est prévue au moins une unité de filtre (10), qui vérifie, d'après le procédé décrit dans la revendication 5 et/ou 6, si, concernant l'impulsion micro-onde reçue, il s'agit de l'impulsion micro-onde réfléchie à la surface du produit (2).

12. Transmetteur de niveau selon au moins l'une des revendications 8 à 11,
comprenant en outre
- au moins un amplificateur (11) destiné à l'amplification (A) de l'impulsion micro-onde à émettre et/ou de l'impulsion micro-onde réfléchie.

13. Transmetteur de niveau selon la revendication 12, pour lequel l'amplificateur (11) amplifie les impulsions micro-ondes réfléchies de telle sorte que l'amplification (A) augmente à mesure que la fréquence de répétition (fₚᵤₗₛ) diminue et que l'amplification (A) diminue à mesure que la fréquence de répétition (fₚᵤₗₛ) augmente.
